# EUROPEAN PATENT APPLICATION

(11) **EP 3 399 196 A1**
(43) Date of publication of application: **07.11.2018**
(21) Application number: 16890616.2
(22) Date of filing: 20.09.2016
(51) Int. Cl.: F15B 11/042, F15B 11/04, F15B 11/044, F16K 31/06

(54) **CONTROL DEVICE FOR FLUID PRESSURE ACTUATOR**

(30) Priority: 18.02.2016 JP 2016028772
(71) Applicant: KYB Corporation, Tokyo 105-6111 (JP)
(72) Inventor: ITO, Tatsuo, Tokyo 105-6111 (JP)
(74) Representative: TBK
(86) International application number: PCT/JP2016/077692
(87) International publication number: WO 2017/141479

(57) **Abstract**

A control device 100 for a fluid pressure actuator includes a first valve 20 controlling a flow of working oil supplied to or discharged from a hydraulic cylinder 2, a regulation determining portion 43 determining whether to increase or decrease an energization amount to the first valve 20 on the basis of a position deviation between an actual position and a target position of the hydraulic cylinder 2, a first proportional gain output portion 44 deciding a command current value to be applied to the first valve 20 on the basis of the position deviation, and an offset current output portion 46 setting an offset current value to be applied to the first valve 20 on the basis of a judgment result of the regulation determining portion 43. The offset current output portion 46 sets a first current value I1 as the offset current value in a valve closing process, and sets a second current value I2 greater than the first current value I1 as the offset current value in a valve opening process.

## Description

### TECHNICAL FIELD

The present invention relates to a control device for a fluid pressure actuator.

### BACKGROUND ART

JP2002-96997A discloses, as a control device for a fluid pressure actuator, a lift cylinder proportional solenoid valve that supplies working oil discharged from a hydraulic pump to left and right lift cylinders or discharges from the lift cylinders, to actuate the lift cylinders.

### SUMMARY OF INVENTION

As disclosed in JP2002-96997A, when extension and contraction of the fluid pressure actuator is controlled by controlling, with a solenoid valve, a flow rate of working fluid supplied to or discharged from the fluid pressure actuator, controllability of the extension and contraction decreases due to an effect caused by hysteresis of the solenoid valve. More specifically, due to the effect caused by hysteresis, an energization amount required to open the solenoid valve becomes greater than that amount at the time of closing the solenoid valve. As such, responsiveness of the solenoid valve at the time of opening the valve decreases due to hysteresis, and controllability of the control device of the fluid pressure actuator decreases.

An object of the present invention is to improve controllability of a control device for a fluid pressure actuator.

According to one aspect of the present invention, a control device for a fluid pressure actuator for controlling extension and contraction of a fluid pressure actuator includes: a detecting portion configured to detect an extending and contracting position of the fluid pressure actuator; a solenoid valve configured to control a flow of working fluid supplied to or discharged from the fluid pressure actuator; and a controller configured to control an energization amount to the solenoid valve so as to control an action of the solenoid valve. The controller has: a deviation calculation portion configured to calculate a position deviation between an actual position of the fluid pressure actuator detected by the detecting portion and a target position of the fluid pressure actuator; a regulation determining portion configured to determine whether to increase or decrease an energization amount to the solenoid valve on the basis of the position deviation; a command value output portion configured to output a command current value applied to the solenoid valve on the basis of the position deviation; and an offset current output portion configured to set an offset current value applied to the solenoid valve on the basis of a determined result of the regulation determining portion. The solenoid valve is controlled on the basis of a value obtained by adding the command current value and the offset current value, and the offset current output portion sets a first current value as the offset current value when the regulation determining portion determines to decrease the energization amount, and the offset current output portion sets a second current value greater than the first current value as the offset current value when the regulation determining portion determines to increase the energization amount.

### BRIEF DESCRIPTION OF DRAWINGS

Fig. 1 is a schematic view showing a configuration of a control device for a fluid pressure actuator and a fluid pressure actuator unit, according to an embodiment of the present invention;
Fig. 2 is a block diagram showing a configuration of a control device for a fluid pressure actuator, according to an embodiment of the present invention;
Fig. 3 is a graph showing valve characteristics of a first valve according to an embodiment of the present invention;
Fig. 4 is a graph showing valve characteristics of a first valve according to a first modification of an embodiment of the present invention;
Fig. 5 is a graph showing valve characteristics of a first valve according to a second modification of an embodiment of the present invention;
Fig. 6 is a graph showing valve characteristics of a first valve according to a comparative example of the present invention; and
Fig. 7 is a block diagram showing a configuration of a control device for a fluid pressure actuator according to a comparative example of the present invention.

### DESCRIPTION OF EMBODIMENTS

Described below with reference to the drawings is a control device 100 for a fluid pressure actuator according to an embodiment of the present invention.

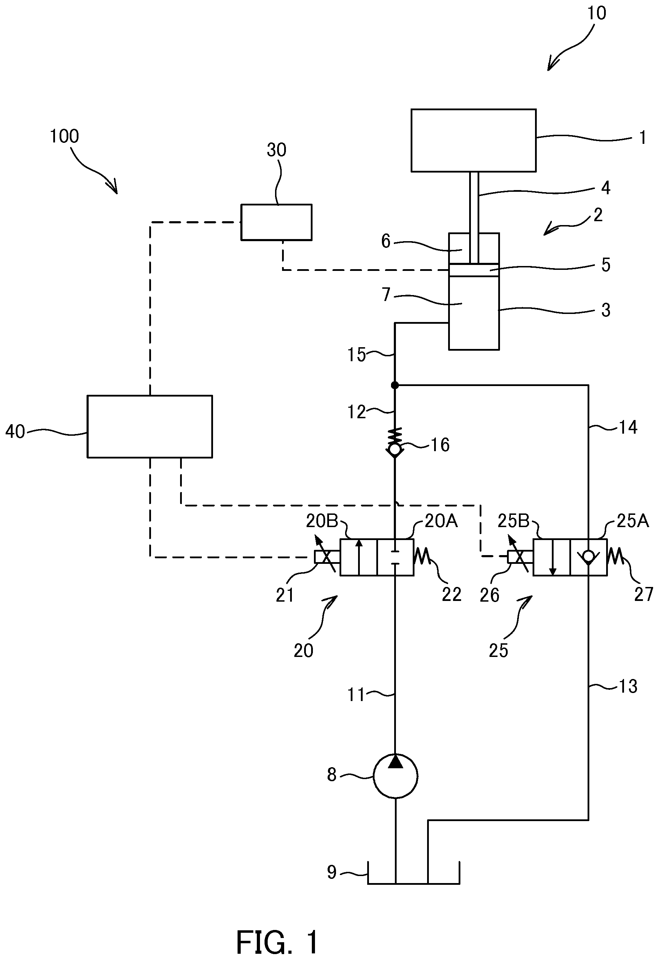

First described with reference to Fig. 1 is an overall configuration of a fluid pressure actuator unit 10 including a control device 100 for a fluid pressure actuator (hereinafter, simply referred to as "control device 100").

The fluid pressure actuator unit 10 is, for example, installed in a forklift, and a lift cylinder is extended and contracted according to a fluid pressure of working fluid so as to lift and lower a load (load 1).

Hereinafter, working oil is used as the working fluid, and the fluid pressure actuator unit 10 that drives the load 1 in a vertical up-down direction in response to an operational input of an operation lever (not shown) by an operator is described.

As shown in Fig. 1, the fluid pressure actuator unit 10 includes a hydraulic cylinder 2 serving as a fluid pressure actuator that extends and contracts due to supplying and discharging working oil to drive the load 1 in a vertical up-down direction, a pump 8 that supplies working oil to the hydraulic cylinder 2, a tank 9 to which working oil discharged from the hydraulic cylinder 2 is guided, and a control device 100 that controls a flow rate of the working oil supplied to or discharged from the hydraulic cylinder 2 to control the extending and contracting of the hydraulic cylinder 2.

The hydraulic cylinder 2 has a cylinder-shaped cylinder tube 3, a piston rod 4 to be inserted inside the cylinder tube 3, and a piston 5 provided on an end of the piston rod 4 and which slides along an inner surface of the cylinder tube 3.

The inside of the cylinder tube 3 is partitioned by the piston 5 into a rod side chamber 6 and a bottom side chamber 7. The hydraulic cylinder 2 is a single-acting hydraulic cylinder whose rod side chamber 6 is opened to the air and whose bottom side chamber 7 is filled with working oil. The hydraulic cylinder 2 extends by a pressure of the working oil supplied to the bottom side chamber 7. When the working oil pressure of the bottom side chamber 7 decreases, the piston rod 4 and the piston 5 move downwards due to self-weight of the load 1, and the hydraulic cylinder 2 contracts.

The control device 100 includes a first valve 20 serving as a solenoid valve that controls a flow of working oil supplied from the pump 8 to the hydraulic cylinder 2, a second valve 25 serving as a solenoid valve that controls a flow of working oil discharged from the hydraulic cylinder 2, a stroke sensor 30 serving as a detecting portion for detecting an extended or contracted position of the hydraulic cylinder 2, and a controller 40 that controls an energization amount to the first valve 20 and the second valve 25 to control actions of the first valve 20 and the second valve 25.

The first valve 20 is a proportional solenoid valve in which a spool (not shown) moves to a position where electromagnetic force generated by energizing a solenoid 21 balances with a spring force of a spring 22, and opens with an opening area corresponding to the position of the spool. Moreover, the second valve 25 is a proportional solenoid valve in which a spool (not shown) moves to a position where electromagnetic force generated by energizing a solenoid 26 balances with a spring force of a spring 27, and opens with an opening area corresponding to the position of the spool. The first valve 20 and the second valve 25 control the flow rate of the working oil passed through by varying the opening area in response to the energization amount to the solenoids 21 and 26.

The first valve 20 is connected to a discharge passage 11 that communicates with the pump 8 and through which working oil discharged from the pump 8 is guided, and a supply passage 12 that communicates with the bottom side chamber 7 of the hydraulic cylinder 2.

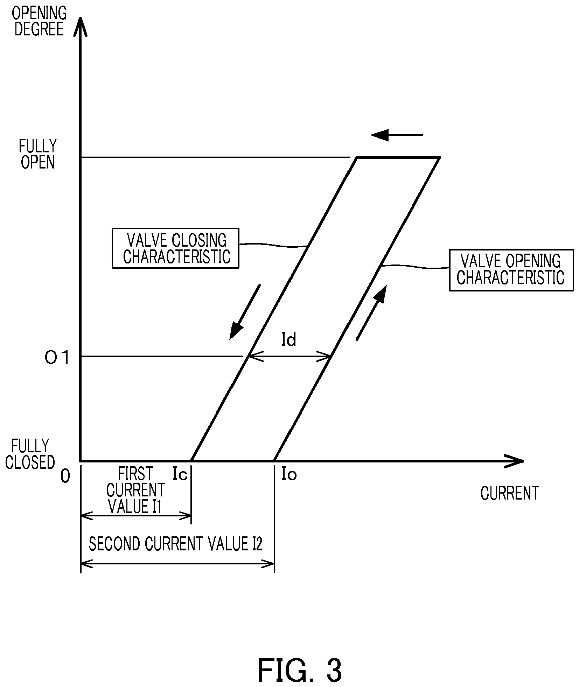

The first valve 20 successively switches between a closed position 20A that disconnects the communication of the discharge passage 11 with the supply passage 12 and an open position 20B that communicates the discharge passage 11 with the supply passage 12, in response to the energization amount to the solenoid 21. When the energization amount to the solenoid 21 is zero or is not more than an open valve energization amount Io of the first valve 20 later described (see Fig. 3), the first valve 20 will be in the closed position 20A by the spring force of the spring 22. The first valve 20 increases in the opening area (flow passage area) of the discharge passage 11 to the supply passage 12 by an increase in the energization amount to the solenoid 21; accordingly, the first valve 20 controls a flow rate of the working oil guided from the discharge passage 11 to the supply passage 12.

In the supply passage 12, a check valve 16 is provided that allows only a flow of the working oil from the pump 8 to the bottom side chamber 7 of the hydraulic cylinder 2.

The second valve 25 is connected to a tank passage 13 that communicates with a tank 9, and a discharge passage 14 that communicates with the bottom side chamber 7 of the hydraulic cylinder 2. The second valve 25 successively switches between a check position 25A that allows only the flow of working oil from the tank passage 13 to the discharge passage 14, and a communicating position 25B that allows a flow of working oil from the discharge passage 14 to the tank passage 13, in response to an energization amount to the solenoid 26. When the energization amount to the solenoid 26 is zero or not more than the open valve energization amount of the second valve 25 (not shown), the second valve 25 will be in the check position 25A by the spring force of the spring 27. That is, the second valve 25 increases the opening area that communicates the discharge passage 14 with the tank passage 13 by increasing the energization amount to the solenoid 26, in other words, increases the flow passage area of working oil guided from the discharge passage 14 to the tank passage 13, and the second valve 25 controls the flow rate of the working oil guided from the discharge passage 14 to the tank passage 13.

The supply passage 12 and the discharge passage 14 communicate with the bottom side chamber 7 of the hydraulic cylinder 2 via a common passage 15 to which both passages merge. Alternatively, the supply passage 12 and the discharging passage 14 may communicate with the bottom side chamber 7 of the hydraulic cylinder 2 independently from each other.

Moreover, the control device 100 includes an unloading valve (not shown) that returns the working oil from the pump 8 to the tank 9 when a differential pressure between an upstream and downstream of the first valve 20 exceeds a set pressure. By providing an unloading valve acting by the differential pressure, the differential pressure across the first valve 20 is maintained constant.

The controller 40 is configured of a microcomputer including a CPU (central processing unit), a ROM (read only memory), a RAM (random access memory) and an I/O interface (input/output interface). The RAM stores data in processes by the CPU, the ROM stores control programs of the CPU in advance, and the I/O interface is used for inputting and outputting information between connected machines.

When there is an operational input for extending the hydraulic cylinder 2 through an operation lever, the controller 40 supplies a current to the solenoid 21 of the first valve 20 to control an action of the first valve 20, while blocking a supply of a current to the solenoid 26 of the second valve 25. Accordingly, the first valve 20 opens from the closed position 20A by an opening degree in response to the energization amount, and allows the discharge passage 11 to communicate with the supply passage 12. Moreover, the second valve 25 becomes in the check position 25A, and blocks the flow of working oil from the discharge passage 14 to the tank passage 13. Therefore, the working oil discharged from the pump 8 is controlled to a flow rate in response to an opening area of the first valve 20, and is guided to the bottom side chamber 7. Accordingly, the hydraulic cylinder 2 extends due to the working oil being supplied to the bottom side chamber 7, and lifts the load 1.

When there is an operational input for contracting the hydraulic cylinder 2 through the operation lever, the controller 40 supplies a current to the solenoid 26 of the second valve 25 to control an action of the second valve 25, while blocking a supply of current to the solenoid 21 of the first valve 20. Accordingly, the second valve 25 opens from the check position 25A by an opening degree in response to the energization amount, and allow the discharge passage 14 to communicate with the tank passage 13. The first valve 20 becomes the closed position 20A, and blocks the passage of the working oil. Moreover, since the check valve 16 is provided in the supply passage 12, no working oil of the bottom side chamber 7 will be discharged through the supply passage 12. Therefore, the working oil of the bottom side chamber 7 is controlled to the flow rate in response to the opening area of the second valve 25, and is discharged to the tank 9. Accordingly, the working oil is discharged from the bottom side chamber 7 by the self-weight of the load 1, and the hydraulic cylinder 2 contracts to lower the load 1.

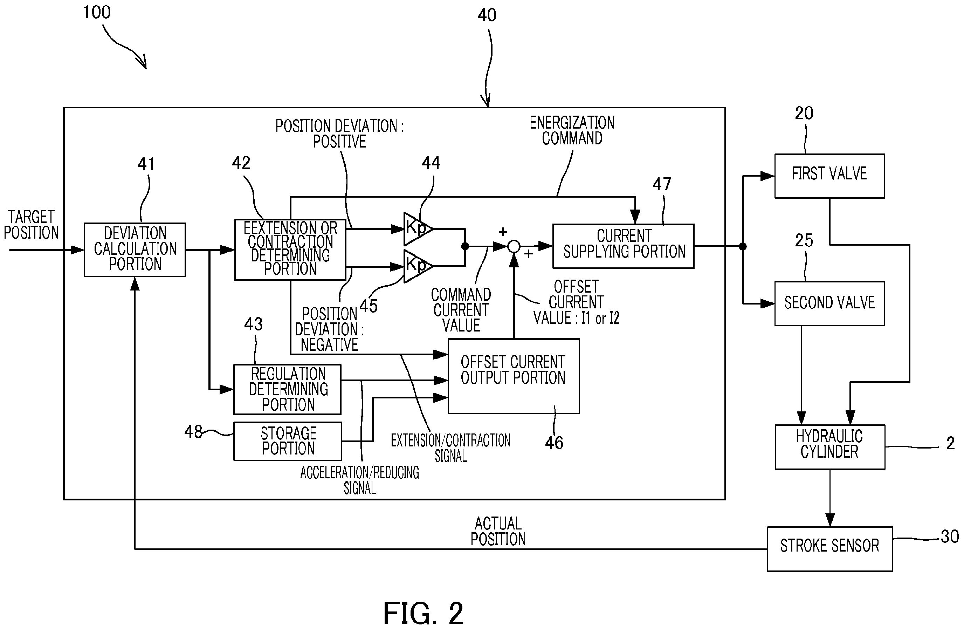

Hereinafter, with reference to Fig. 2, a specific configuration of the controller 40 is described.

The controller 40 energizes the solenoid 21 of the first valve 20 and the solenoid 26 of the second valve 25 by a current amount in response to a value obtained by adding a command current value defined on the basis of an operation amount of the operation lever by an operator and an offset current value independent of the operation amount. Accordingly, the controller 40 controls the actions of the first valve 20 and the second valve 25.

As shown in Fig. 2, the controller 40 has a deviation calculation portion 41 for calculating a position deviation between an actual position of the hydraulic cylinder 2 detected by the stroke sensor 30 and a target position for extending and contracting the hydraulic cylinder 2, an extension or contraction determining portion 42 for determining whether to extend or contract the hydraulic cylinder 2 on the basis of the position deviation, a regulation determining portion 43 for determining, on the basis of the position deviation, whether to increase or decrease the energization amount to the first valve 20 and the second valve 25, a first proportional gain output portion 44 and a second gain output portion 45 as command value outputting portions, for outputting a command current value to be supplied to the first valve 20 and the second valve 25, an offset current output portion 46 for outputting an offset current value applied to the first valve 20 and the second valve 25 on the basis of a determined result of the regulation determining portion 43, a current supplying portion 47 for supplying current to the solenoids 21 and 26 of the first and second valves 20 and 25 with an energization amount in response to the offset current value and the command current value, and a storage portion 48 for storing an offset current value outputted by the offset current output portion 46.

In the control device 100, the extension or contraction determining portion 42 determines whether the operational input of the operator causes the hydraulic cylinder 2 to extend or to contract, and determines whether to control the first valve 20 or the second valve 25. The controlling of the first valve 20 and the second valve 25 are basically the same, except for the point that a supplied offset current value is different. Therefore, in the following descriptions, a configuration related mainly to the first valve 20 is described as an example, and descriptions related to the second valve 25 is omitted as appropriate.

The deviation calculation portion 41 calculates a position deviation that is a difference between an actual position of the hydraulic cylinder 2 inputted from the stroke sensor 30, more specifically an actual position of the piston 5, and a target position of the piston 5 of the hydraulic cylinder 2 calculated on the basis of an operational input (operation amount) by the operator. In the position deviation calculated by the deviation calculation portion 41, in addition to information of magnitude (absolute value), a positive or negative sign representing a magnitude relationship of the target position with the actual position is also included.

The extension or contraction determining portion 42 determines whether to extend or contract the hydraulic cylinder 2 by determining the positive or negative of the sign of the position deviation, in other words, the magnitude relationship between the target position and the actual position. That is to say, by the extension or contraction determining portion 42, judgment is made on whether to actuate the first valve 20 or the second valve 25.

On the basis of a change in position deviation, the regulation determining portion 43 determines whether to increase the energization amount to the first valve 20 (whether to open the first valve 20) or to decrease this amount (close the first valve 20). More specifically, in each of the controlling steps of a feedback control later described, which are performed at predetermined control intervals, judgment is made of whether the calculated position deviation is increased or decreased from a position deviation calculated in a control step one before.

The first proportional gain output portion 44 outputs a command current value to be supplied to the first valve 20. The first proportional gain output portion 44 multiplies a proportional gain Kp to the position deviation calculated by the deviation calculation portion 41, and outputs this as the command current value. The second proportional gain output portion 45 outputs a command current value to be supplied to the second valve 25.

The offset current output portion 46 outputs an offset current value as a current value independent of the position deviation. The offset current output portion 46 outputs an offset current value corresponding to each of the first valve 20 and the second valve 25 on the basis of determined results by the extension or contraction determining portion 42 and the regulation determining portion 43. More specifically, when the regulation determining portion 43 determines to decrease the energization amount, the offset current output portion 46 outputs a first current value I1 corresponding to each of the first valve 20 and second valve 25 as the offset current values. Moreover, when the regulation determining portion 43 determines to increase the energization amount, the offset current output portion 46 outputs a second current value I2 corresponding to each of the first valve 20 and the second valve 25 as the offset current values. The first current value I1 and the second current value I2 being the offset current values are later described.

A current supplying portion 47 supplies a current to the solenoid 21 of the first valve 20 by an energization amount adding the offset current value to the command current value. Accordingly, the first valve 20 actuates in response to the energization amount supplied, and the flow rate of the working oil passing through the first valve 20 is controlled.

Next, with reference to Fig. 3, a specific description is provided for the first current value I1 and second current value 12, which are offset current values. Hereinafter also, descriptions are provided mainly for the first current value I1 and the second current value I2 for controlling the first valve 20, and descriptions for the first current value I1 and the second current value I2 for controlling the second valve 25 will be omitted as appropriate.

The first current value I1 and the second current value I2 are defined on the basis of valve characteristics (see Fig. 3) that define a relationship between an energization amount to the first valve 20 (set as any value) and an opening degree (flow rate). The second current value I2 is set as a value greater than the first current value 12. The first current value I1 and the second current value I2 with respect to the second valve 25 are set on the basis of the valve characteristics (not shown) of the second valve 25, as with the first valve 20.

As shown in Fig. 3, the valve characteristics of the first valve 20 include a valve opening characteristic representing a relationship between the energization amount and the opening degree of when the energization amount is increased to make the first valve 20 in the open position 20B (fully open) from the closed position 20A (fully closed) (hereinafter, referred to as "valve opening process"), and a valve closing characteristic representing a relationship between the energization amount and the opening degree of when the energization amount is decreased to make the first valve 20 in the closed position 20A from the open position 20B (hereinafter, referred to as "valve closing process").

Generally, in solenoid valves, even when the solenoids are energized by the same amounts, hysteresis of different opening degrees of the solenoid valves occur in response to a moving direction of the valve body due to friction or the like occurring when the valve body such as a spool or the like slides. Therefore, as shown in Fig. 3, in the valve characteristics of the first valve 20, an open valve energization amount Io when the first valve 20 opens is greater than a closed valve energization amount Ic when the first valve 20 closes. Namely, for example in a case in which the opening degree of the first valve 20 is an opening degree O1, a difference Id is generated in a required energization amount between the valve opening characteristics and the valve closing characteristics. In the valve characteristics of the first valve 20, a uniform difference Id is generated between the opening characteristics and the closing characteristics across all opening degrees.

The first current value I1 and the second current value I2 are set on the basis of valve characteristics of the first valve 20 as like those above. More specifically, the first current value I1 is a closed valve energization amount Ic (see Fig. 3) that is a total sum of energization amounts applied to the solenoid 21 when the energization amount to the solenoid 21 is decreased and the first valve 20 closes due to biasing force of the spring 22. Moreover, the second current value I2 is a value obtained by adding the difference Id to the closed valve energization amount Ic, namely, an open valve energization amount Io (see Fig. 3) being a total sum of energization amounts of when the energization amount to the solenoid 21 is increased and the first valve 20 opens by electromagnetic force of the solenoid 21. As such, the second current value I2 is set greater than the first current value I1 by the difference Id between the valve opening characteristic and the valve closing characteristic due to the hysteresis. Moreover, the offset current output portion outputs different current values in the valve closing process and the valve opening process of the first valve 20, as offset current values. The storage portion 48 stores the closed valve energization amount Ic being the first current value 11, and the difference Id to be added to the closed valve energization amount Ic to set the second current value 12. The storage portion 48 also stores a closed valve energization amount (not shown) of the second valve 25 defined on the basis of the valve characteristics of the second valve 25, and a difference (not shown) between energization amounts of the valve opening process and the valve closing process.

Next describes feedback control of the hydraulic cylinder 2 by the controller 40, and a control method of the energization amount to the first valve 20.

In the control device 100, positional feedback control is performed by the controller 40 per predetermined time interval (control step) on the basis of a position deviation between a target position calculated on the basis of an operation amount of the operation lever by the operator and an actual position of the hydraulic cylinder 2 detected by the stroke sensor 30. More specifically, the controller controls the extension and contraction of the hydraulic cylinder 2 by controlling the energization amount to the first valve 20 and the second valve 25 in response to the absolute value of the position deviation, the positive and negative of the value of the position deviation, and a degree in variation of the position deviation. The energization amount to the first valve 20 and the second valve 25 is defined in response to a command current value outputted in response to the position deviation, and an offset current value independent of the position deviation. Hereinafter, mainly referring to Fig. 2, the control by the controller 40 will be described in detail.

When the operation lever is operated by the operator, the target position of the hydraulic cylinder 2 is calculated in response to the operation amount. The calculated target position is inputted to the deviation calculation portion 41, as shown in Fig. 2. The relationship between the operation amount of the operation lever and the target position of the hydraulic cylinder 2 is set in advance to any value.

The deviation calculation portion 41 subtracts an actual position detected by the stroke sensor 30 from the inputted target position to calculate the position deviation. The calculated position deviation is inputted to the extension or contraction determining portion 42 and the regulation determining portion 43.

When the position deviation is inputted to the extension or contraction determining portion 42, the extension or contraction determining portion 42 determines whether the sign of the position deviation is positive or negative. The extension or contraction determining portion 42 determines to extend the hydraulic cylinder 2 when the target position is greater than the actual position, and the sign of the inputted position deviation is positive. In this case, the extension or contraction determining portion 42 outputs the position deviation to the first proportional gain output portion 44, and together outputs an energization command to the current supplying portion 47 to energize the first valve 20. Moreover, in this case, the extension or contraction determining portion 42 outputs an extension signal to the offset current output portion 46.

The extension or contraction determining portion 42 determines to contract the hydraulic cylinder 2 when the target position is smaller than the actual position, and the sign of the position deviation is negative. In this case, the extension or contraction determining portion 42 outputs a position deviation to the second proportional gain output portion 45, and together outputs an energization command to the current supply portion 47 to energize the second valve 25. Moreover, in this case, the extension or contraction determining portion 42 outputs a contraction signal to the offset current output portion 46.

The following describes a case in which the action of the first valve 20 is controlled to extend the hydraulic cylinder 2, in other words a case in which the sign of the position deviation is positive and the position deviation is inputted to the first proportional gain output portion 44 as an example, and omits descriptions as appropriate for a case in which the action of the second valve 25 is controlled to contract the hydraulic cylinder 2.

When the position deviation is inputted, the first proportional gain output portion 44 multiplies a proportional gain Kp defined in advance to a magnitude of the position deviation (absolute value), and outputs a value obtained upon multiplication as a command current value. The proportional gain Kp is suitably adjusted in advance so that a relationship between the inputted position deviation and the outputted command current value is one that makes the first valve 20 achieve a desired action.

When the position deviation is inputted to the regulation determining portion 43, the regulation determining portion 43 calculates a variation (increase or decrease) between the inputted position deviation and a previous position deviation inputted in a control step one before. In a case in which the position deviation has increased from the position deviation inputted in the previous control step, the regulation determining portion 43 determines to increase the energization amount to the first valve 20 so as to increase the opening degree. Namely, the regulation determining portion 43 determines that the operational input through the operation lever increases the flow rate of the working oil supplied to or discharged from the hydraulic cylinder 2, and increases the extending/contracting speed of the hydraulic cylinder 2. In this case, the regulation determining portion 43 outputs an acceleration signal to the offset current output portion 46.

The regulation determining portion 43, when the position deviation is decreased or is the same, determines to decrease the energization amount to the first valve 20 and decrease the opening degree. Namely, the regulation determining portion 43 determines that the operational input through the operation lever decreases the flow rate of the working oil supplied to or discharged from the hydraulic cylinder 2, and decreases the extending/ contracting speed of the hydraulic cylinder 2. The determined result of the regulation determining portion 43 is inputted to the offset current output portion 46. In this case, the regulation determining portion 43 outputs a reducing signal to the offset current output portion 46.

When the acceleration signal that increases the energization amount to the first valve 20 is energized is inputted from the regulation determining portion 43, the offset current output portion 46 obtains the closed valve energization amount Ic and the difference Id from the storage portion 48, and outputs a value obtained by adding these (closed valve energization amount Ic + difference Id = open valve energization amount Io) as the second current value 12. Moreover, when the reducing signal that decreases the energization amount to the first valve 20 is inputted from the regulation determining portion 43, the offset current output portion 46 obtains the closed valve energization amount Ic from the storage portion 48 and outputs this as the first current value 11. The offset current value outputted by the offset current output portion 46 is added to the command current value outputted from the first proportional gain output portion 44 and is inputted to the current supply portion 47.

The current supply portion 47 supplies a current to the first valve 20 in response to the energization command inputted from the extension or contraction determining portion 42, with an energization amount of a value obtained by adding the command current value and the offset current value.

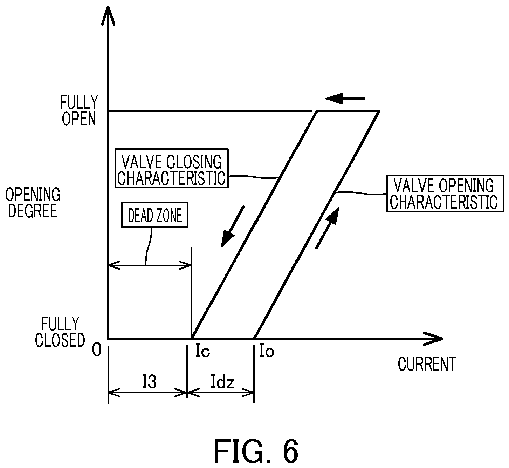

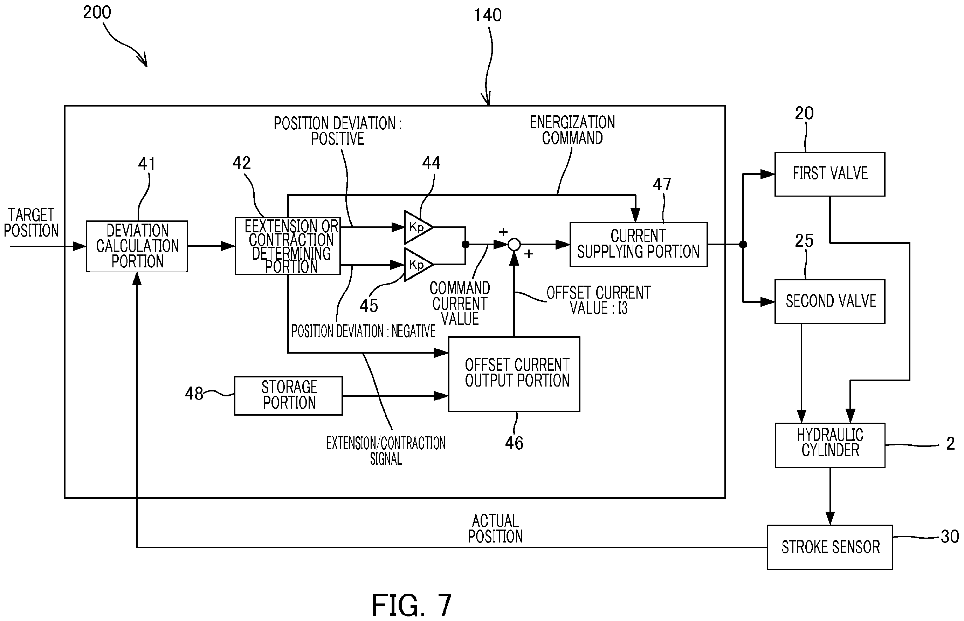

Here, to facilitate the understanding of the present invention, a control device 200 according to a comparative example is described with reference to Fig. 6 and Fig. 7. Fig. 6 is a graph showing valve characteristics and an offset current of a first valve 20 in the control device 200, and its horizontal axis represents an energization amount to the solenoid 21, and its vertical axis represents an opening degree of the valve. Fig. 7 is a block diagram showing a configuration of the control device 200.

Generally, in the proportional solenoid valve, a dead zone (see Fig. 6), which requires a predetermined energization amount until the valve opens, is provided by adjusting the spring force and the like of the spring, to securely close the valve in a state in which the current is blocked. By providing the dead zone, the proportional solenoid valve can be securely closed in a state in which the current is blocked.

However, in the proportional solenoid valve, by providing the dead zone, although the valve closing action stabilizes, an action lag occurs in which the valve does not open immediately due to an effect of the spring force of the spring, even when the operation lever is operated by the operator. Therefore, in the control device 200, when the operation lever is operated just slightly and the command current value from the controller 40 is small, the first valve 20 may not open due to an insufficient amount of the energization amount to the solenoid 21. As such, by providing the dead zone, the energization amount required to open the first valve 20 increases, and thus the responsiveness of the first valve 20 decreases.

Accordingly, in the control device 200, as shown in Fig. 6 and Fig. 7, a predetermined offset current value I3 is provided to the first valve 20 in advance regardless of the operation amount (position deviation) of the operation lever, to prevent the action lag caused by the dead zone. In the control device 200, a current in response to a value obtained by adding the command current value outputted in response to the position deviation and the offset current value I3 independent of the position deviation is supplied to the first valve 20. Namely, compared to a case in which no offset current value I3 is supplied, a current greater by the offset current value I3 will be supplied to the first valve 20, even with the same operation amount. Accordingly, even in a case in which the operation amount of the operation lever is small and the command current value is relatively small, a current value exceeding the open valve energization amount Io is applied to the solenoid 21, and the first valve 20 opens. As such, by supplying the offset current value I3 independent of the operation amount (position deviation) to the first valve 20, the first valve 20 can be opened without receiving effect of the dead zone. Thus, the responsiveness of the first valve 20 improves while securely closing the valve while the current is blocked.

However, in the control device 200, as shown in Fig. 7, the controller 140 includes no regulation determining portion 43, and the offset current value I3 is set as the same value in the valve opening process and the valve closing process. The offset current value I3 is set as a value not more than the closed valve energization amount Ic, to securely close the first valve 20, as shown in Fig. 6. Therefore, as shown in Fig. 6, in the control device 200, without providing a command current value equivalent to a difference Idz between the offset current value I3 and the valve opening current value Io, the first valve 20 will not open due to the hysteresis effect. Namely, in the control device 200, due to the hysteresis effect, an action lag that requires the difference Idz as the predetermined energization amount until the first valve 20 opens occurs.

Thus, even if attempting to control to achieve identical target opening degrees in the valve opening process and the valve closing process in the control device 200, a difference occurs in the actual positions of the hydraulic cylinder 2 due to the action lag caused by the hysteresis. In other words, in the control device 200, even if the same position deviation occurs, it is necessary to supply a current greater by the difference Idz in the valve opening process than in the valve closing process. As such, in the control device 200, although it is possible to prevent the action lag caused by the dead zone, it is not possible to prevent the action lag caused by the hysteresis effect of the first valve 20, and cannot sufficiently improve the controllability of the first valve 20.

On the other hand, in the control device 100, an offset current value different between the valve opening process and the valve closing process is outputted, on the basis of a determined result of the regulation determining portion 43. More specifically, in the valve closing process, the closed valve energization amount Ic (see Fig. 3) is outputted as the offset current value (first current value I1), and in the valve opening process, a value obtained by adding the difference Id (see Fig. 3) to the closed valve energization amount Ic is outputted as the offset current value (second current value 12). That is to say, the offset current value outputted in the valve opening process (second current value 12) is greater than the offset current value outputted in the valve closing process (first current value I1) by the difference Id between the open valve characteristics and the closed valve characteristics.

As such, in the control device 100, the difference Id of the current value between the valve opening process and the valve closing process occurred by hysteresis is compensated by the offset current value (second current value 12). Therefore, even when the same position deviation occurs, the energization amount to the first valve 20 increases in the valve opening process than the valve closing process by the difference Id. Accordingly, in the valve opening process and the valve closing process, even when the same command current value is outputted due to the same position deviation, no difference will occur in the actual position of the hydraulic cylinder 2. Therefore, in the control device 100, the action lag in the valve opening process is prevented while the first valve 20 is securely closed, thus allowing for improving the responsiveness of the first valve 20. In other words, by making the offset current value in the valve opening process (second current value 12) greater by the difference Id than the closed valve energization amount Ic being the offset current value in the valve closing process (first current value I1), it is possible to apparently eliminate the hysteresis between the valve opening process and the valve closing process in the first valve 20, and improve the controllability of the control device 100.

Here, if a value greater than the closed valve energization amount Ic serves as the first current value I1, an energization amount exceeding the closed valve energization amount Ic will be applied to the first valve 20, even when the command current value in the valve closing process is in a zero state. Therefore, in this case, the first valve 20 may not completely close.

In comparison, in the control device 100, the first current value I1 is set to the closed valve energization amount Ic or less. By setting the first current value I1 to the closed valve energization amount Ic or less, the energization amount supplied to the first valve 20 becomes the first current value I1 that is smaller than the closed valve energization amount Ic, in the state in which the command current value is zero. Therefore, the first valve 20 can be securely closed in the state in which the command current value is zero.

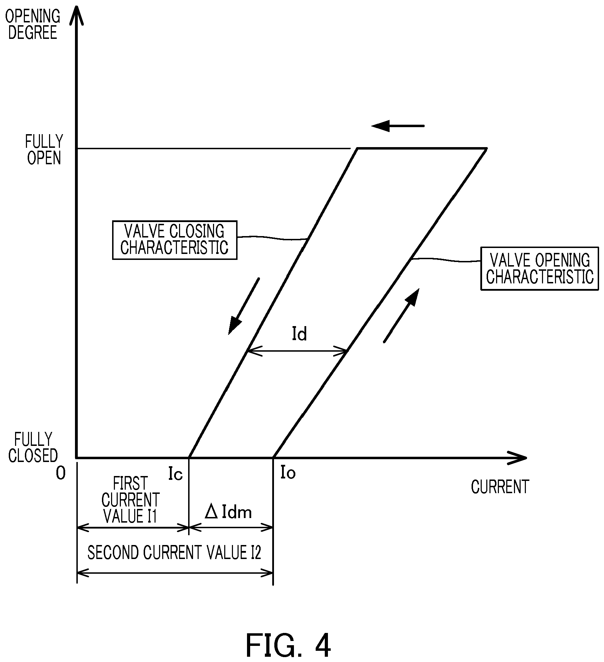

Next describes a modification of the present embodiment with reference to Fig. 4.

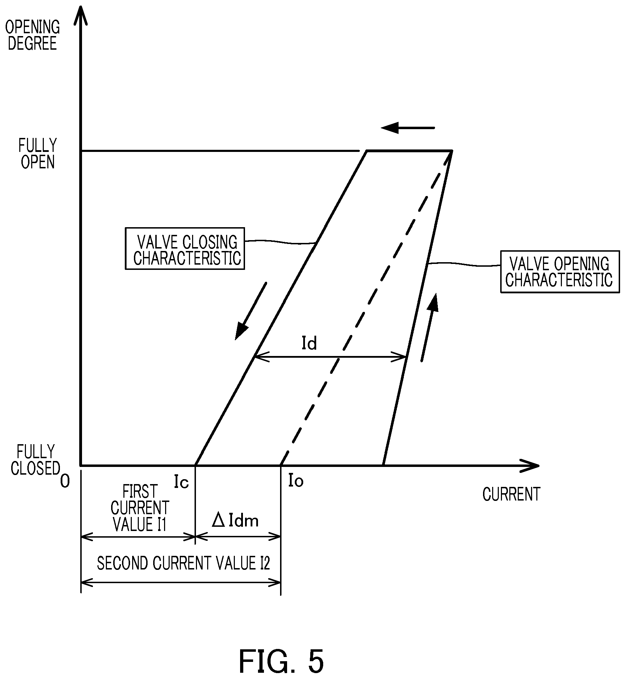

In the above embodiment, a uniform difference Id generates across the entire opening degree region in the valve opening characteristics and the valve closing characteristics of the first valve 20. Accordingly, the closed valve energization amount Ic serves as the first current value I1, and the value obtained by adding the difference Id to the closed valve energization amount Ic, namely, the open valve energization amount Io serves as the second current value 12. In comparison, for example, as shown in Fig. 4 and Fig. 5, when the difference Id1 between the open valve characteristics and the closed valve characteristics of the first valve 20 is not uniform across the entire opening degree region, a value obtained by adding a minimum differential value Idm, which is a minimum value of the difference Id, to the first current value 11, can serve as the second current value 12. By making the second current value I2 greater by just the minimum differential value Idm than the first current value 11, the command current value can be made positive in the whole region of the control region even when the first current value I1 serves as the closed valve energization amount Ic, and thus can improve the controllability.

Moreover, in the present embodiment, the first current value I1 serving as the offset current value in the valve closing process is the closed valve energization amount Ic, and the second current value I2 serving as the offset current value in the valve opening process is the open valve energization amount Io. The second current value I2 can be set to any value as long as it is greater than the first current value I1 and does not exceed the open valve energization amount Io. Moreover, the second current value I2 does not necessarily have to be set greater than the first current value I1 by just the minimum differential value Idm, and may be set greater than the first current value I1 by a value smaller than the minimum differential value Idm.

Moreover, in the above embodiment, the fluid pressure actuator is a single-acting hydraulic cylinder 2 whose inside of the cylinder tube 3 is partitioned into the rod side chamber 6 and the bottom side chamber 7 by the piston 5, and whose load 1 is moved in a vertical direction. Alternatively, the fluid pressure actuator may be a ram type single-acting hydraulic cylinder. Moreover, the fluid pressure actuator may be a double-acting hydraulic cylinder in which working oil is filled into both the rod side chamber 6 and the bottom side chamber 7, and which extends and contracts by a differential pressure of the working oil pressure in both chambers. Moreover, the fluid pressure actuator may be a single-acting hydraulic cylinder whose rod side chamber 6 is not open to the air but connected to the tank 9, which extends by working oil supplied to the bottom side chamber 7, and which contracts by load weight or biasing force of a spring or like. Moreover, an extending/contracting direction of the fluid pressure actuator may be in any direction, not limited to the vertical direction.

Moreover, in the above embodiment, the current supplying portion 47 supplies a current to either one of the first valve 20 and the second valve 25 upon receiving an energization command from the extension or contraction determining portion 42. In comparison, the control device 100 may include two current supplying portions, and may perform the supplying of the current to the first valve 20 and the supplying of the current to the second valve 25 separately.

According to the above embodiment, the following effects are exerted.

In the control device 100, the differences of the open valve current value Io and the closed valve energization amount Ic with the offset current value is decreased in both the valve opening process and the valve closing process, thus allowing for reduction of the dead zone. Therefore, the command current value for opening the valve can be decreased while securely closing the first valve 20 and the second valve 25, and thus can improve the responsiveness. Therefore, the command current value required for achieving identical opening degrees can be made substantially identical in the valve opening process and the valve closing process of the first valve 20 and the second valve 25, and can improve the controllability by the control device 100.

Moreover, in the control device 100, the first current value I1 is set to a closed valve energization amount Ic or less. Therefore, the first valve 20 and the second valve 25 can be securely closed in a state in which the command current value is zero.

Configurations, operations, and effects of the embodiment of the present invention will be summarized below.

A control device 100 for controlling extension and contraction of a hydraulic cylinder 2 that extends and contracts due to supplying or discharging working oil includes: a stroke sensor 30 that detects an extending or contracting position of the hydraulic cylinder 2; a first valve 20 and a second valve 25, that control a flow of working oil supplied to or discharged from the hydraulic cylinder 2; and a controller 40 that controls an energization amount to the first valve 20 and the second valve 25 to control an action of the first valve 20 and the second valve 25. The controller 40 has a deviation calculation portion 41 that calculates a position deviation between an actual position of the hydraulic cylinder 2 detected by the stroke sensor 30 and a target position of the hydraulic cylinder 2, a regulation determining portion 43 that determines whether to increase or decrease an energization amount to the first valve 20 and the second valve 25 on the basis of the position deviation, first and second proportional gain output portions 44 and 45 decides a command current value to be applied to the first valve 20 and the second valve 25 on the basis of the position deviation, and an offset current output portion 46 that sets an offset current value to be applied to the first valve 20 and the second valve 25 on the basis of a determined result by the regulation determining portion 43. The first valve 20 and the second valve 25 being controlled on the basis of a value obtained by adding the command current value and the offset current value, , the offset current output portion 46 sets a first current value I1 as the offset current value when the regulation determining portion 43 determines to decrease the energization amount, and sets a second current value I2 greater than the first current value I1 as the offset current value when the regulation determining portion 43 determines to increase the energization amount.

In this configuration, the offset current value set by the offset current output portion 46 is set so that the second current value I2 in valve opening in which the energization amount is increased is greater than the first current value I1 in valve closing in which the energization amount is decreased. As such, while the valve is open, the greater offset current value is provided in advance to the first valve 20 and the second valve 25. It is thus possible to decrease the command current value required to open the valve, and improve the responsiveness of the first valve 20 and the second valve 25. Therefore, the controllability of the control device 100 improves.

Moreover, in the control device 100, it is characterized in that valve characteristics representing a relationship between the energization amount to the first valve 20 and the second valve 25 and the opening degree include an open valve characteristic representing a relationship between an energization amount and the opening degree at the time of increasing the energization amount to the first valve 20 and the second valve 25 to change from a fully closed state to a fully open state, and a closed valve characteristic representing a relationship between an energization amount and the opening degree at the time of reducing the energization amount to change from the fully open state to the fully closed state, and the first current value I1 is not more than a closed valve energization amount Ic at the time of reducing the energization amount to the first valve 20 and the second valve 25 to make the first valve 20 and the second valve 25 fully closed.

In this configuration, since the first current value I1 is not exceeding the closed valve energization amount Ic, it is possible to securely close the first valve 20 and the second valve 25 in a state in which the command current value is zero.

The embodiments of the present invention described above are merely illustration of some application examples of the present invention and not of the nature to limit the technical scope of the present invention to the specific constructions of the above embodiments.

The present application claims a priority based on Japanese Patent Application No. 2016-28772 filed with the Japan Patent Office on February 18, 2016, all the contents of which are hereby incorporated by reference.

## Claims

1. A control device for a fluid pressure actuator for controlling extension and contraction of a fluid pressure actuator, the control device comprising:
a detecting portion configured to detect an extending and contracting position of the fluid pressure actuator;
a solenoid valve configured to control a flow of working fluid supplied to or discharged from the fluid pressure actuator; and
a controller configured to control an energization amount to the solenoid valve so as to control an action of the solenoid valve,
the controller having:
a deviation calculation portion configured to calculate a position deviation between an actual position of the fluid pressure actuator detected by the detecting portion and a target position of the fluid pressure actuator;
a regulation determining portion configured to determine whether to increase or decrease an energization amount to the solenoid valve on the basis of the position deviation;
a command value output portion configured to output a command current value applied to the solenoid valve on the basis of the position deviation; and
an offset current output portion configured to set an offset current value applied to the solenoid valve on the basis of a determined result of the regulation determining portion, wherein
the solenoid valve is controlled on the basis of a value obtained by adding the command current value and the offset current value, and
the offset current output portion sets a first current value as the offset current value when the regulation determining portion determines to decrease the energization amount, and the offset current output portion sets a second current value greater than the first current value as the offset current value when the regulation determining portion determines to increase the energization amount.

2. The control device for a fluid pressure actuator according to claim 1, wherein
the solenoid valve has a solenoid configured to generate electromagnetic force by being energized, and an biasing member configured to exert biasing force against the electromagnetic force of the solenoid, the solenoid valve opening in conjunction with an increase in the energization amount to the solenoid, and
the first current value is not more than a closed valve energization amount which is a total sum of energization amounts applied to the solenoid when the solenoid valve closes due to biasing force of the biasing member.
